# EUROPÄISCHE PATENTSCHRIFT

(11) **EP 2 525 991 B1**
(45) Veröffentlichungstag und Bekanntmachung des Hinweises auf die Patenterteilung: **17.01.2018**
(21) Anmeldenummer: 11701498.5
(22) Anmeldetag: 20.01.2011
(51) Int. Cl.: F21S 8/10

(54) **KFZ-SCHEIBENEINHEIT MIT BEFESTIGUNG FÜR ZIERLEISTE**
VEHCILE WINDOW PANE WITH FIXING MEANS FOR DECORATIVE STRIP
VITRE DE VEHICULE AVEC DES MOYENS DE FIXATION POUR UNE BAGUETTE DECORATIVE

(30) Priorität: 20.01.2010 DE 202010001223 U
(43) Veröffentlichungstag der Anmeldung: 28.11.2012
(73) Patentinhaber: Richard Fritz Holding GmbH, 74354 Besigheim (DE)
(72) Erfinder: HERBST, Erich, 74354 Besigheim (DE)
(74) Vertreter: Maser, Jochen
(86) Internationale Anmeldenummer: PCT/EP2011/050767
(87) Internationale Veröffentlichungsnummer: WO 2011/089188

(56) Entgegenhaltungen:
- DE-A1- 2 224 799
- DE-A1- 3 432 592
- DE-A1- 3 604 389
- DE-A1-102005 054 721
- US-A1- 2003 075 949

## Beschreibung

Die Erfindung betrifft eine Scheibeneinheit, insbesondere für Kraftfahrzeuge, mit einer Scheibe und einem Rahmen, an dem eine Zierleiste befestigbar ist, die den Rahmen zumindest teilweise abdeckt.

Aus der DE 198 18 153 A1 ist eine solche Scheibeneinheit bekannt, bei der entlang von betreffenden Längenabschnitten am Rahmen Halteleisten aus einem Werkstoff höherer Festigkeit eingeformt werden. Beispielsweise werden diese bei der Herstellung des Rahmens in die Spritzform eingelegt und teilweise umspritzt. Nach dem Ausformen der Scheibeneinheit werden überstehende Teile von Positionierelementen an der Halteleiste entfernt. Auf diesen verbleibenden Halteleisten werden Halteklammern aus Metall aufgeschoben, die einerseits in Nuten der Halteleiste eingreifen und andererseits Rastflügel aufweisen, an denen die Zierleiste eingeklipst wird.

Diese Art der Halterung einer Zierleiste wird bei Scheibeneinheiten verwendet, bei denen der Rahmen in den Flächenbereichen der Scheibe weit hineinragt und daher die Halterung für die Zierleiste im äußeren Flächenbereich des Rahmens an einer Außenseite am Scheibenrand untergebracht werden kann.

Des Weiteren ist aus der DE 10 2005 054 721 A1 eine Scheibeneinheit bekannt, bei der die Grundrissfläche des Rahmens zum größeren Teil außerhalb der Scheibe liegt, so dass die Verankerung einer Zierleiste nicht mittels der zuvor beschriebenen Halteleiste und den darauf aufschiebbaren Halteklammern erfolgen kann. Deshalb wird eine Halterung für Zierleisten geschaffen, welche eine Halteleiste aufweist, die von einer Rückseite an einem zweiten Profilabschnitt des Rahmens einsetzbar ist, um eine Zierleiste, die von der Vorderseite auf den Rahmen aufsetzbar ist, durch eine Klips- oder Rastverbindung aufzunehmen. Dabei umfasst der Rahmen Ausnehmungen, in welcher Rastelemente der Halteleiste eingreifen und in Richtung auf die Zierleiste ragen, um an Profilabschnitten der Zierleiste anzugreifen und diese am Rahmen zu fixieren. Diese Anordnung erfordert, dass getrennt vom Rahmen hergestellte Halteleisten zunächst zum zweiten Profilabschnitt des Rahmens zu positionieren sind, bevor die Zierleiste montiert werden kann.

Aus der US 2003/0075949 A ist eine Scheibeneinheit mit einer Scheibe und einem Rahmen bekannt, wobei der Rahmen an die Scheibe angespritzt ist. Im Rahmen ist ein Einlegeteil vorgesehen, welches ermöglicht, dass nach dem Verkleben des Rahmens mit einem Karosserieabschnitt eine Zierleiste aufklipsbar ist. Die Zierleiste geht mit dem Einlegeteil eine unlösbare Rastverbindung ein, so dass ein nachträgliches Lösen der Rastverbindung ohne Beschädigung der Rasthaken nicht ermöglicht ist.

Aus der DE 34 32 592 A1 ist ein Einglasungsprofil für Scheiben für Fahrzeuge bekannt, welches ein Einlegeteil zur rastenden Aufnahme einer Zierleiste aufweist. Analoges ist aus der gattungsgemäßen DE 36 04 389 A1 bekannt.
Der Erfindung liegt die Aufgabe zugrunde, eine Anordnung zur Befestigung der Zierleiste für die vorgenannten Scheibeneinheiten zu schaffen, die in einem Arbeitsschritt eine einfache Montage der Zierleiste zum Rahmen der Scheibeneinheit ermöglicht, eine hohe Abzugskraft zur sicheren Aufnahme der Zierleiste aufweist und die Zierleiste demontierbar aufnimmt.
Diese Aufgabe wird erfindungsgemäß durch eine Scheibeneinheit gemäß den Merkmalen des Anspruchs 1 gelöst. Weitere vorteilhafte Ausgestaltungen und Weiterbildungen sind in den weiteren unabhängigen Ansprüchen angegeben.
Durch die erfindungsgemäße Ausgestaltung der Scheibeneinheit, bei welcher im Befestigungsbereich des Rahmens zur Aufnahme der zumindest einen Zierleiste zumindest ein Einlegeteil vorgesehen ist, welches an dem Rahmen angespritzt oder vom Rahmen zumindest teilweise umhüllt ist und ein Fixierabschnitt aufweist, der mit dem Rahmen verbunden ist und einen Montageabschnitt aufweist, der zumindest eine Durchstecköffnung zur Aufnahme des Befestigungselementes der Zierleiste aufweist und der zumindest ein lösbares Rastelement zugeordnet ist, welches das in der Durchstecköffnung positionierte Befestigungselement der Zierleiste gegen selbständiges Lösen sichert, wird ermöglicht, dass die Zierleiste in einfacher Weise in einem Arbeitsschritt durch Aufstecken oder Aufsetzen montierbar ist. Durch das Rastelement, das der Durchstecköffnung zugeordnet ist, wird ermöglicht, dass nach dem lagerichtigen Positionieren der Zierleiste beziehungsweise des Befestigungselementes der Zierleiste in der jeweiligen Durchstecköffnung das Rastelement an dem Befestigungselement angreift und die Einbauposition der Zierleiste durch selbständiges Verrasten sichert. Diese Anordnung weist des Weiteren den Vorteil auf, dass durch die Anordnung des Einlegeteils an oder im Rahmen eine erhöhte Abzugskraft erzielt wird, so dass eine verbesserte Befestigung der Zierleiste am Rahmen gegeben ist. Im Rahmen ist ein zur Durchstecköffnung des Montageabschnittes des Einlegeteils führender Aufnahmebereich zum Positionieren der Zierleiste vorgesehen, der einen von außen bis zur Durchstecköffnung sich erstreckenden stufenlosen Wandabschnitt aufweist. Diesem Wandabschnitt ist eine stufenlose Wandfläche am Profilabschnitt der Zierleiste zugeordnet. Dies ermöglicht, dass ein Demontagewerkzeug für die Zierleiste zwischen dem Wandabschnitt des Aufnahmebereiches und der Wandfläche der Zierleiste eingeführt werden kann, um durch die Durchstecköffnung hindurchzuragen und das lösbare Rastelement so weit aus seiner Verriegelungsposition herauszuführen, dass die Zierleiste in entgegengesetzter Richtung zur Montage abgezogen werden kann. Die Zierleiste kann im Schadensfall in einfacher Weise abgenommen und ausgetauscht werden kann. Gleichzeitig wird die Handhabung einer solchen Scheibeneinheit erleichtert, da das Einlegeteil fest mit dem Rahmen verbunden beziehungsweise an dem Rahmen angespritzt oder zumindest teilweise eingespritzt oder umhüllt beziehungsweise integriert ist, wodurch auch ein Zeitvorteil beim Einbau der Scheibeneinheit in einer Einbauöffnung oder Karosserieöffnung, insbesondere von einer Fahrzeugkarosserie, erzielt wird.

Eine bevorzugte Ausführungsform der Erfindung sieht vor, dass das lösbare Rastelement und die Durchstecköffnung an dem Einlegeteil angeordnet sind. Dies ermöglicht ein einfaches und schnelles Einlegen des Einlegeteils in eine Spritzgussform zur Herstellung des Rahmens als Spritzformteil beziehungsweise Umspritzung, welche an der Scheibe angreift. Bevorzugt ist das Rastelement und die Durchstecköffnung einteilig an dem Einlegeteil ausgebildet. Dadurch kann eine Reduzierung in der Anzahl der Bauteile ermöglicht werden.

Nach einer weiteren vorteilhaften Ausgestaltung der Erfindung ist vorgesehen, dass das lösbare Rastelement des Einlegeteils benachbart zur Durchstecköffnung positioniert ist und ein freies Ende des Rastelementes zumindest teilweise die Aufsteckrichtung des Befestigungselementes der Zierleiste nach dem Einsetzen in den Montageabschnitt des Einlegeteils quert. Dies ermöglicht, dass während einer einfachen Aufsteckbewegung der Zierleiste durch das Befestigungselement der Zierleiste das Rastelement zumindest teilweise ausgelenkt werden kann, um anschließend nach der lagerichtigen Positionierung der Zierleiste zum Rahmen selbständig in eine Verriegelungsposition zum Befestigungselement zurückzukehren und die Zierleiste sicher zum Rahmen zu fixieren.

Nach einer bevorzugten Ausgestaltung der Erfindung ist das lösbare Rastelement als ein steg- oder keilförmiger Vorsprung als Rastnase oder Rastclip vorgesehen, der an dem Befestigungselement der Zierleiste an- oder eingreift. Dadurch kann eine konstruktiv einfache Ausgestaltung des Einlegeteils erzielt werden, um die einfache Montage und Demontage zu ermöglichen.

Eine weitere bevorzugte Ausgestaltung der Erfindung sieht vor, dass das Einlegeteil aus Kunststoff, insbesondere einem verstärkten, bevorzugt glasfaserverstärkten, Kunststoff, aus Metall, insbesondere Stahlblech oder aus Leichtmetall, insbesondere Aluminium oder einer Aluminiumlegierung, hergestellt ist. Das Einlegeteil kann beispielsweise aus einem Kunststoff, insbesondere Kunststoffspritzgussteil, hergestellt werden. Somit kann eine kostengünstige Herstellung und eine in der Größe und Form an die Kontur des Rahmens und/oder an die Anforderung zur Fixierung der Zierleiste angepasste Ausgestaltung ermöglicht werden. In Abhängigkeit der Abzugskräfte und des Einbauraumes kann auch ein metallisches Einlegeteil, wie beispielsweise Stahleinlegeteil oder ein nichtmetallisches Einlegeteil, wie beispielsweise eine Leichtmetalllegierung, insbesondere aus Aluminium oder dergleichen, vorgesehen sein.

Nach einer weiteren bevorzugten Ausgestaltung der Erfindung ist vorgesehen, dass das Einlegeteil mehrere Durchstecköffnungen mit Abstand zueinander aufweist und vorzugsweise sich entlang der Länge der Zierleiste als ein einziges Einlegeteil erstreckt. Diese Anordnung weist den Vorteil auf, dass bei der Herstellung der Scheibeneinheit nur ein Einlegeteil in die Spritzgussform zur Herstellung des Rahmens einzubringen ist. Darüber hinaus kann dadurch auch eine Versteifung der Scheibe erzielt werden, insbesondere wenn diese aus einem Kunststoffmaterial hergestellt ist.

Nach einer weiteren bevorzugten Ausgestaltung der Erfindung ist vorgesehen, dass das Einlegeteil am Fixierabschnitt zumindest eine Durchbrechung aufweist und/oder zumindest eine Verankerungsrippe umfasst. Durch die Einbringung der zumindest einen Durchbrechung kann erzielt werden, dass bei der Herstellung des Rahmens das Kunststoffmaterial sich durch die zumindest eine Durchbrechung erstreckt und somit das Einlegeteil in dem Rahmen nicht nur positioniert, sondern auch fixiert. Dies ermöglicht darüber hinaus, dass Kunststoffmaterialien für das Einlegeteil verwendet werden können, welche sich nicht oder nur schlecht mit dem Kunststoffmaterial für die Herstellung des Rahmens verbinden. Darüber hinaus kann die Aufbringung eines zusätzlichen Klebstoffes für eine mögliche Verbindung eingespart werden. Alternativ oder ergänzend können Verankerungsrippen zumindest an dem Fixierabschnitt des Einlegeteils vorgesehen sein, um eine verbesserte Positionierung und lagerichtige Anordnung des Einlegeteils im Rahmen zu sichern.

Nach einer weiteren bevorzugten Ausgestaltung der Erfindung ist vorgesehen, dass der Montageabschnitt und der Fixierabschnitt des Einlegeteils in einer gemeinsamen Ebene liegen. Bei einer solchen Ausgestaltung wird eine besonders flachbauende Anordnung zur sicheren Aufnahme der Zierleiste ermöglicht. Sofern sich die Umspritzung beziehungsweise der Rahmen in eine Raumrichtung in einem größeren Umfang erstreckt, der abweichend von der Scheibenebene ist, können der Fixierabschnitt und der Montageabschnitt in einem Winkel zueinander angeordnet sein, so dass die vorgesehene Anordnung und Dimensionierung des Rahmens beibehalten und dennoch eine einfache Montage und leichte Demontierbarkeit der Zierleiste sowie hohe Abzugskräfte ermöglicht werden.

Des Weiteren ist bevorzugt vorgesehen, dass die Zierleiste zumindest ein Befestigungselement aufweist, welches steg- oder laschenförmig ausgebildet ist und eine Ausnehmung oder Vertiefung zum Eingreifen des Rastelementes aufweist. Dies ermöglicht eine konstruktiv einfache Anordnung der Zierleiste an der Scheibeneinheit.

Das Demontagewerkzeug zum Lösen der Zierleiste ist bevorzugt schwertförmig, spachtelförmig oder in Form eines sehr flach ausgebildeten Brieföffners oder dergleichen ausgebildet, um dieses in den Zwischenraum einzustecken und das lösbare Rastelement aus seiner Verriegelungsposition in eine Entriegelungsposition überzuführen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Ansicht einer Scheibeneinheit,
- Figur 2: eine perspektivische Ansicht einer Zierleiste für eine Scheibeneinheit gemäß Figur 1,
- Figuren 3a bis c: schematische Ansichten eines Einlegeteils für einen Rahmen der Scheibeneinheit gemäß Figur 1,
- Figur 4: eine schematische Schnittdarstellung entlang der Linie IV-IV in Figur 1 und
- Figur 5: eine schematische Schnittdarstellung einer alternativen Ausführungsform zu Figur 4.

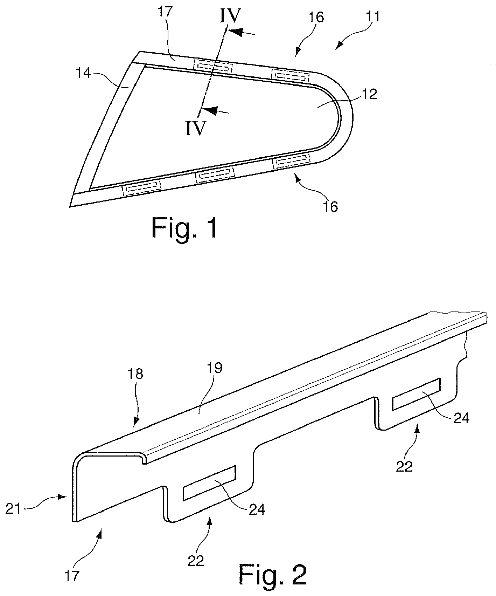

In Figur 1 ist schematisch eine Scheibeneinheit 11 dargestellt, welche eine Scheibe 12 beispielsweise aus einem Glas, insbesondere Silikatglas, oder aus einem Kunststoff, insbesondere Kunstharz, aufweist. An der Scheibe 12 ist ein Rahmen 14 vorgesehen, der beispielsweise ringförmig geschlossen ausgebildet wird und die Scheibe 12 vollständig umgibt. Der Rahmen 14 ist aus einem thermoplastischen Elastomer (TPE) hergestellt und wird auch als Umspritzung bezeichnet. Dieser Rahmen 14 wird bevorzugt in einem Spritzwerkzeug als Spritzformteil hergestellt und an der Scheibe 12 angeformt. An dem Rahmen 14 sind mehrere Befestigungsbereiche 16 vorgesehen, welche zur Fixierung eines Anbauteiles, wie beispielsweise einer Zierleiste 17, dienen.

Eine solche Scheibeneinheit 11 gemäß Figur 1 wird im Bereich einer vorgegebenen Öffnung eines nicht näher dargestellten Karosserieteiles nach bereits bekannten Techniken eingesetzt und bevorzugt dauerhaft mit dem Karosserieteil verbunden. Die Figur 1 stellt eine Ansicht von außen auf die Scheibeneinheit dar.

In Figur 2 ist perspektivisch eine Zierleiste 17 beispielhaft als Anbauteil dargestellt. Diese Zierleiste 17 ist als Längsprofil ausgebildet und weist einen zur Sichtseite weisenden Profilabschnitt 18 mit einer Dekoroberfläche 19 auf, welche in der Form und Größe an die Einbausituation beziehungsweise den zu überdeckenden Rahmen 14 angepasst ist, sowie einen Profilabschnitt 21, der zur Befestigung an dem Rahmen 14 dient. An dem Profilabschnitt 21 sind mehrere Befestigungselemente 22 vorgesehen, die steg- oder laschenförmig ausgebildet sind. Diese Befestigungselemente 22 umfassen eine oder mehrere Ausnehmungen 24, welche den Profilabschnitt 21 vollständig queren. Alternativ zur Ausnehmung 24 können eine oder mehrere Vertiefungen vorgesehen sein, welche ebenfalls zur Positionierung oder Fixierung der Zierleiste 17 zum Rahmen 14 dienen. Die Befestigungselemente 22 sind bevorzugt als ebene und flache oder plattenförmige Abschnitte am Profilabschnitt 21 ausgebildet, welche in den Befestigungsbereichen 16 zur Fixierung der Zierleiste 17 angeordnet sind.

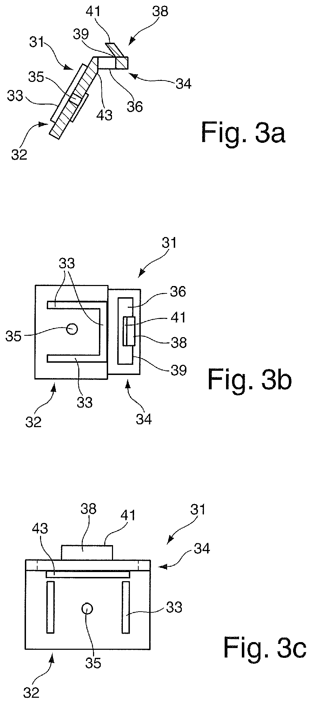

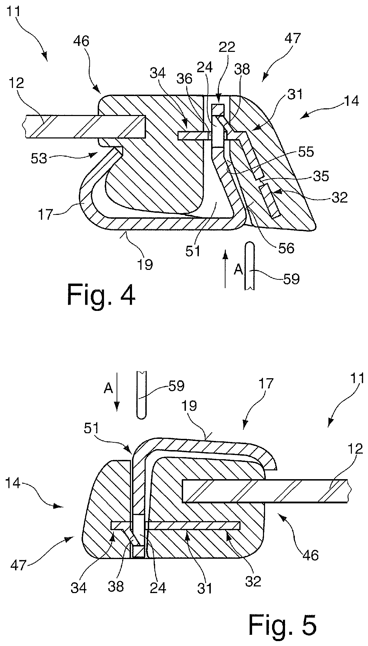

In den Figuren 3a bis c ist ein Einlegeteil 31 in einer Schnittansicht, einer Ansicht von oben und einer Vorderansicht dargestellt. Das Einlegeteil 31 wird, wie in den Figuren 4 und 5 noch näher beschrieben wird, mit dem Rahmen 14 verbunden oder in den Rahmen 14 eingehüllt oder integriert. Das Einlegeteil 31 ist bevorzugt als Kunststoffteil hergestellt. Bevorzugt ist dieses Einlegeteil 31 als Kunststoffspritzgussteil hergestellt. Dabei kann ein gegenüber dem Kunststoffmaterial für den Rahmen 14 verstärktes oder versteiftes Material vorgesehen sein. Dies kann entweder durch ein Kunststoffmaterial erfolgen, welches ein erhöhtes Elastizitätsmodul umfasst oder durch Hinzugabe von Glasfasern oder Einlegeelementen, Verstärkungselement oder dergleichen. Alternativ kann das Einlegeteil 31 auch aus Metall oder einer Leichtmetalllegierung oder dergleichen beispielsweise als Stanzbiegeteil hergestellt sein.

Die Form und Geometrie des Einlegeteiles 31 sind nur beispielhaft dargestellt und an einen Rahmen 14 angepasst, der beispielsweise in Figur 4 dargestellt ist. Das Einlegeteil 31 umfasst einen Fixierabschnitt 32, welcher ausschließlich zur Einbindung des Einlegeteils 31 in den Rahmen 14 dient sowie zu dessen sicheren Aufnahme. Darüber hinaus kann der Fixierabschnitt 32 auch zur Versteifung des Rahmens 14 beitragen. Hierfür ist der Fixierabschnitt 32 beispielsweise plattenförmig ausgebildet und kann an der Vor- und/oder Rückseite Verstärkungsrippen 33 aufweisen. Ebenso können diese eine verbesserte Verkrallung des Einlegeteils 31 mit dem Rahmen 14 ermöglichen. Die Verstärkungsrippen 33 sind beispielsweise auf einer Außenseite in einer U-Form einander zugeordnet. Auf einer Innenseite sind zwei parallel zueinander ausgerichtete Verstärkungsrippen 33 vorgesehen. Weitere Geometrien und Konturen sind ebenso denkbar.

Zur sicheren Positionierung und Einbindung des Einlegeteils 31 in den Rahmen 14 können des Weiteren alternativ zu den Verstärkungsrippen 33 oder zusätzlich im Fixierabschnitt 32 und/oder Montageabschnitt 34 eine oder mehrere Durchbrechungen 35 vorgesehen sein. Während der Herstellung des Rahmens 14 in der Spritzgussform werden diese Durchbrechungen 35 ebenso von dem Kunststoffmaterial des Rahmens 14 durchquert, so dass eine formschlüssige Einbindung des Einlegeteils 31 in den Rahmen 14 erzielt wird. Gegebenenfalls kann eine solche Durchbrechung 35 auch zur Fixierung des Einlegeteils 31 in dem Spritzgussformteil vorgesehen sein.

Das Einlegeteil 31 umfasst des Weiteren den Montageabschnitt 34, der zur Aufnahme des Anbauteils, insbesondere der Zierleiste 17, vorgesehen ist. Hierzu ist in dem Montageabschnitt 34 eine Durchstecköffnung 36 vorgesehen, welche bevorzugt länglich ausgebildet ist. Die Kontur der Durchstecköffnung 36 ist an die Geometrie der Befestigungselemente 22 angepasst oder umgekehrt, so dass diese Befestigungselemente 22 in die Durchstecköffnung 36 eingeführt und hindurchgeführt werden können. Der Durchstecköffnung 36 zugeordnet ist ein Rastelement 38, welches bevorzugt an einen Rand 39 der Durchstecköffnung 36 angrenzt und das freie Ende 41 des Rastelementes 38 sich über die Durchstecköffnung 36 erstreckt beziehungsweise die Durchstecköffnung 36 in Durchsteckrichtung zumindest teilweise quert oder kreuzt. Dadurch bildet das Rastelement nach dem Einsetzen der Zierleiste 17 eine Abzugssperre und verkrallt sich vorzugsweise widerhakenförmig an dem Befestigungselement 22 der Zierleiste 17. Dieses Rastelement 38 kann sich vollständig oder auch teilweise entlang der Länge der Durchstecköffnung 36 erstrecken. Ebenso können auch zwei oder mehrere einzelne Rastelement 38 entlang des Randes 39 der Durchstecköffnung 36 vorgesehen sein. Die Größe und Neigung des Rastelementes 38, welches vorzugsweise steg- oder keilförmig ausgebildet ist, kann in Abhängigkeit der erforderlichen Abzugskraft dimensioniert werden. Das Rastelement 38 erstreckt sich mit seinem freien Ende 41 derart in die Ausnehmung 24 des Befestigungselementes 21 der Zierleiste 17, dass eine sichere Montageposition der Zierleiste 17 erzielt wird, wie dies in Figur 4 dargestellt ist.

Das Einlegeteil 31 gemäß den Figuren 3a bis c weist beispielsweise eine abgewinkelte Anordnung des Montageabschnittes 34 zum Fixierabschnitt 32 auf. Diese Abwicklung ist nur beispielhaft. Sofern eine solche Abwicklung erfolgt, kann gegebenenfalls zusätzlich eine Abflachung 43 am Fixierabschnitt 32 vorgesehen sein. Diese kann zusätzlich als eine Anlagefläche während der Montage der Zierleiste 17 zum Rahmen 14 dienen.

In Figur 4 ist eine schematische Schnittdarstellung entlang der Linie IV-IV in Figur 1 dargestellt. Der Rahmen 14 weist einen ersten Profilabschnitt 46 auf, welcher unmittelbar ein äußeres Ende der Scheibe 12 umgibt und den Rahmen 14 zur Scheibe 12 festlegt. Des Weiteren weist der Rahmen 14 einen zweiten Profilabschnitt 47 auf, der das Einlegeteil 31 aufnimmt. Im Ausführungsbeispiel ist das Einlegeteil 31 vom Rahmen 14 vollständig umhüllt beziehungsweise im Rahmen 14 integriert. Alternativ kann vorgesehen sein, dass das Einlegeteil 31 an dem Rahmen 14 nur teilweise umhüllt beziehungsweise dass das Einlegeteil 31 am Rahmen 14 angespritzt ist.

In den Befestigungsbereichen 16 im Rahmen 14 ist jeweils ein Aufnahmebereich 51 zum Einsetzen und Positionieren der Zierleiste 17 vorgesehen. Der Aufnahmebereich 51 kann beispielsweise den Rahmen 14 vollständig durchqueren, so dass die Durchstecköffnung 36 von einer Innen- und Außenseite zugänglich ist. Ebenso kann dieser Aufnahmebereich 51 als eine Art Sackloch ausgebildet sein, so dass zwar das Befestigungselement 22 des Profilabschnitts 21 der Zierleiste 17 in die Durchstecköffnung 36 von außen einsteckbar ist, jedoch eine Zugänglichkeit im Aufnahmebereich 51 von der Innenseite nicht ermöglicht wird. Dadurch kann beispielsweise auch eine Abdichtung gegen eindringende Feuchtigkeit und Nässe gegeben sein. Die Zierleiste 17 wird gemäß Pfeil A von außen auf den Rahmen 14 aufgesetzt und mit den Befestigungselementen 22 voran in den Aufnahmebereich 51 eingeführt und aufgesteckt. Beim Überführen der Zierleiste 17 in die in Figur 4 dargestellte Einbauposition kann beispielsweise ein freies Ende der Dekoroberfläche 19 im Bereich 53 den Rahmen 14 hintergreifen und/oder daran anliegen. Die Befestigungselemente 22 werden durch die Durchstecköffnungen 36 hindurchgeführt. Während dieser Aufsetz- oder Montagebewegung wird das Rastelement 38 aus seiner Ausgangsposition ausgelenkt, so dass das Befestigungselement 22 daran vorbeigeführt werden kann. Deshalb ist das Rastelement 38 bevorzugt in Aufsteckrichtung gemäß Pfeil A gesehen hinter der Durchstecköffnung 36 angeordnet. Sobald die Ausnehmung 24 über das freie Ende 41 des Rastelementes 38 hinaus bewegt ist, greift dieses selbständig in die Ausnehmung 34 aufgrund der geneigten Ausgangsposition ein, wodurch das freie Ende 41 des Rastelementes 38 eine Abzugsbewegung der Zierleiste 17 entgegengesetzt zur Pfeilrichtung A sperrt. Aufgrund des Einlegeteiles 31 in dem Rahmen 14 kann die Abzugskraft erhöht werden.

Zum Lösen der Zierleiste 17 ist vorgesehen, dass ein Werkzeug 59, welches nur schematisch dargestellt ist, in einen Spalt zwischen dem Aufnahmebereich 51 und der Zierleiste 17 eingeführt wird. Das Werkzeug 59 wird entlang eines vorzugsweise stufenlos ausgebildeten Wandabschnitts 55 des Aufnahmebereichs 51 bis zur Durchstecköffnung 36 eingeführt. Eine Wandfläche 56 des Befestigungselementes 22 der Zierleiste 17 ist bevorzugt ebenso stufenlos ausgebildet, so dass ein leichtes Entlanggleiten und Einführen des Werkzeuges 59 möglich ist. Das Werkzeug 59 wird durch die Durchstecköffnung 36 hindurchgeführt, um das freie Ende 41 des Rastelementes 38 aus der Ausnehmung 24 des Befestigungselementes 22 der Zierleiste 17 herauszuführen beziehungsweise herauszuschwenken. Anschließend kann die Zierleiste 17 entgegen der Pfeilrichtung A aus dem Rahmen 14 vor dem Werkzeug 59 oder gleichzeitig mit dem Werkzeug 59 entnommen werden. Somit ist eine Anordnung mit einer leichten Demontierbarkeit der Zierleiste 17 gegeben.

In Figur 5 ist eine schematische Schnittdarstellung einer alternativen Ausführungsform des Rahmens 14 des Einlegeteils 31 und der Zierleiste 17 zu Figur 4 dargestellt. Bei dieser Ausführungsform ist das Einlegeteil 31 als ebenes plattenförmiges Element, bestehend aus dem Fixierabschnitt 32 und Montageabschnitt 34, vorgesehen. Lediglich das Rastelement 38 ist abweichend zu dieser Ebene angeordnet. Bei dieser Ausführungsform ist der Fixierabschnitt 32 im ersten Profilabschnitt 46 oder in den ersten Profilabschnitt 46 angrenzend angeordnet und der Montageabschnitt 34 im zweiten Profilabschnitt 47 vorgesehen. Diese Anordnung des Einlegeteils 31 in den Profilabschnitten 46, 47 kann grundsätzlich anwendungsspezifisch ausgewählt werden. Im Übrigen gelten die Ausführungen, Vorteile und Alternativen zu den in Figur 4 und den weiteren vorstehend beschriebenen Ausführungsformen.

## Patentansprüche

1. Scheibeneinheit, insbesondere für Kraftfahrzeuge,
- mit einer Scheibe (12), einem Rahmen (14) und einer an dem Rahmen (14) befestigbaren Zierleiste (17), die den Rahmen (14) zumindest teilweise abdeckt, der entlang seiner gesamten Längserstreckung einen ersten Profilabschnitt (46) aufweist, der eine Verbindung mit der Scheibe (12) bildet und der einen an den ersten Profilabschnitt (46) angrenzenden zweiten Profilabschnitt (47) aufweist,
- mit im Abstand zueinander in Längserstreckung des Rahmens (14) angeordneten Befestigungsbereichen (16) zur Fixierung der Zierleiste (17), die einen Profilabschnitt (18) aufweist, der eine Dekoroberfläche (19) umfasst, die den Rahmen (14) zumindest teilweise überdeckt und einen Profilabschnitt (21) mit zumindest einem Befestigungselement (22) aufweist, welches im Befestigungsbereich (16) anordenbar ist,
- mit zumindest einem im Befestigungsbereich (16) des Rahmens (14) vorgesehenen Einlegeteil (31), welches an dem Rahmen (14) angespritzt oder vom Rahmen (14) zumindest teilweise umhüllt ist,
- mit einem am Einlegeteil (31) vorgesehenen Fixierabschnitt (32), der mit dem Rahmen (14) verbunden ist und
- mit einem Montageabschnitt (34), der dem Befestigungsbereich (16) zugeordnet ist, und zumindest eine Durchstecköffnung (36) zur Aufnahme des Befestigungselementes (22) der Zierleiste (17)
- wobei das Einlegeteil (31) zumindest ein lösbares Rastelement (38) umfasst, welches der Durchstecköffnung (36) zugeordnet ist,
- wobei das in der Durchstecköffnung (36) des Einlegeteils (31) positionierte Befestigungselement (22) der Zierleiste (17) durch das lösbare Rastelement (38) gegen selbständiges Lösen gesichert ist,
- **dadurch gekennzeichnet, dass** im Rahmen (14) ein zur Durchstecköffnung (36) des Montageabschnitts (34) des Einlegeteils (31) führender Aufnahmebereich (51) zur Aufnahme und Positionierung der Zierleiste (17) vorgesehen ist, der einen von außen bis zur Durchstecköffnung (34) sich erstreckenden stufenlosen Wandabschnitt (55) aufweist, welchem in einer Befestigungsposition der Zierleiste (17) eine stufenlose Wandfläche (56) am Profilabschnitt (22) der Zierleiste (17) zugeordnet ist.

2. Scheibeneinheit nach Anspruch 1, **dadurch gekennzeichnet, dass** das lösbare Rastelement (38) und die Durchstecköffnung (36) an dem Einlegeteil (31) vorzugsweise einstückig angeordnet sind.

3. Scheibeneinheit nach Anspruch 1 oder 2, **dadurch gekennzeichnet, dass** das lösbare Rastelement (38) des Einlegeteils (31) benachbart zur Durchstecköffnung (36) oder an die Durchstecköffnung (36) angrenzend positioniert ist und das freie Ende (41) des Rastelementes (38) zumindest teilweise die Aufsteckrichtung des Befestigungselementes (22) der Zierleiste (17) nach dem Einsetzen in den Montageabschnitt (34) quert.

4. Scheibeneinheit nach einem der vorhergehenden Ansprüche, **dadurch gekennzeichnet, dass** das lösbare Rastelement (38) als steg- oder keilförmiger Vorsprung, Rastnase oder Rastclip ausgebildet ist.

5. Scheibeneinheit nach einem der vorhergehenden Ansprüche, **dadurch gekennzeichnet, dass** das Einlegeteil (31) aus Kunststoff, insbesondere aus einem verstärkten, bevorzugt faserverstärktem Kunststoffmaterial, aus Metall, insbesondere Stahlblech, oder aus Leichtmetall, insbesondere Aluminium, hergestellt ist.

6. Scheibeneinheit nach einem der vorhergehenden Ansprüche, **dadurch gekennzeichnet, dass** das Einlegeteil (31) mehrere Durchstecköffnungen (36) mit Abstand zueinander aufweist und vorzugsweise das Einlegeteil (31) entlang der Länge der Zierleiste (17) als ein durchgehendes Einlegeteil (31) sich am oder im Rahmen (14) erstreckt.

7. Scheibeneinheit nach einem der vorhergehenden Ansprüche, **dadurch gekennzeichnet, dass** das Einlegeteil (31) am Fixierabschnitt (32) zumindest eine Durchbrechung (35) und/oder zumindest eine Verstärkungsrippe (33) aufweist.

8. Scheibeneinheit nach einem der vorhergehenden Ansprüche, **dadurch gekennzeichnet, dass** der Montageabschnitt (34) und der Fixierabschnitt (32) des Einlegeteils (31) in einer gemeinsamen Ebene oder winklig zueinander angeordnet sind.

9. Scheibeneinheit nach einem der vorhergehenden Ansprüche, **dadurch gekennzeichnet, dass** das oder die Befestigungselemente (22) der Zierleiste (17) steg- oder laschenförmig ausgebildet sind und zumindest eine Ausnehmung (24) oder Vertiefung zur Aufnahme des Rastelementes (38) aufweisen.

## Claims

1. Window pane unit, in particular for motor vehicles, including
- a pane (12), a frame (14), and a decorative strip (17) attachable to the frame (14) that at least partially covers the frame (14) which, along its entire longitudinal extension, has a first profile portion (46) forming a connection with said pane (12) and has a second profile portion (47) adjacent to the first profile portion (46),
- fixing areas (16) spaced apart from each other along a longitudinal extension of the frame (14) for fixing a decorative strip (17) thereon which has a profile portion (18) comprising a decorative surface (19) which at least partially covers the frame (14) and has a profile portion (21) having at least one fastener (22) that may be arranged in the fixing area (16),
- at least one insert (31) that is provided in the fixing area (16) of the frame (14) and is integrally formed with the frame (14) by injection-moulding or is at least partially enclosed by the frame (14),
- a fixing portion (32) which is provided on said insert (31) and connected to the frame (14), and
- a mounting portion (34) which is associated with the fixing area (16), and at least one plug-through opening (36) for receiving the fastener (22) of the decorative strip (17),
- said insert (31) comprising at least one releasable snap-lock element (38) which is associated with the plug-through opening (36),
- said fastener (22) of the decorative strip (17) positioned in the plug-through opening (36) of the insert (31) being secured against inadvertent release by the releasable snap-lock element (38),
- **characterised in that** the frame (14) has a reception zone (51) provided therein which leads to the plug-through opening (36) of the mounting portion (34) of the insert (31) for the purpose of receiving and positioning the decorative strip (17), said reception zone having a wall portion (55) without steps extending from the outside to the plug-through opening (34) with which a corresponding wall surface (56) without steps provided on the profile portion (22) of the decorative strip (17) is associated when said decorative strip (17) is in a fixed position.

2. The window pane unit as claimed in claim 1, **characterised in that** the releasable snap-lock element (38) and the plug-through opening (36) are preferably disposed on the insert (31) as a single piece.

3. The window pane unit as claimed in claim 1 or 2, **characterised in that** the releasable snap-lock element (38) of the insert (31) is positioned proximate to the plug-through opening (36) or adjacent to the plug-through opening (36) and the free end (41) of the snap-lock element (38) at least partially crosses the plug-on direction of the fastener (22) of the decorative strip (17), once the latter has been inserted into the mounting portion (34).

4. The window pane unit as claimed in any of the preceding claims, **characterised in that** the releasable snap-lock element (38) is realised as a land-like or wedge-like projection, snap-on nose or snap-on clip.

5. The window pane unit as claimed in any of the preceding claims, **characterised in that** the insert (31) is made of a plastic material, in particular a reinforced, preferably fibre-reinforced, plastic material, of metal, in particular sheet steel or light metal, in particular aluminium.

6. The window pane unit as claimed in any of the preceding claims, **characterised in that** the insert (31) has a plurality of plug-through openings (36) spaced apart from one another and **in that** the insert (31) preferably extends as a continuous insert (31) on or within the frame (14), along the length of the decorative strip (17).

7. The window pane unit as claimed in any of the preceding claims, **characterised in that** on its fixing portion, (32) the insert (31) has at least one aperture (35) and/or at least one reinforcement rib (33).

8. The window pane unit as claimed in any of the preceding claims, **characterised in that** the mounting portion (34) and the fixing portion (32) of the insert (31) are disposed in a common plane or are angularly arranged to one another.

9. The window pane unit as claimed in any of the preceding claims, **characterised in that** the fastener(s) (22) of the decorative strip (17) is/are realised in a land-like or tab-like shape and has/have at least one recess (24) or depression for receiving the snap-lock element (38) therein.

## Revendications

1. Module de vitrage, en particulier pour des voitures automobiles,
- avec une vitre (12), un cadre (14) et une baguette décorative (17) qui peut être fixée au cadre (14) et qui recouvre au moins partiellement ledit cadre (14), lequel présente, le long de la totalité de son extension longitudinale, une première partie profilée (46) qui forme une liaison avec la vitre (12) et une deuxième partie profilée (47) qui est contiguë à la première partie profilée (46),
- avec des zones de fixation (16) disposées à une distance donnée les unes des autres dans l'extension longitudinale du cadre (14) et destinées à la fixation de la baguette décorative (17) laquelle présente une partie profilée (18) comprenant une surface décorative (19) qui recouvre au moins partiellement le cadre (14) et une partie profilée (21) qui est pourvue d'au moins un élément de fixation (22) pouvant être disposé dans ladite zone de fixation (16),
- avec au moins un insert (31) qui est prévu dans la zone de fixation (16) du cadre (14) et qui est formé par injection sur le cadre (14) ou qui est enveloppé au moins partiellement par ledit cadre (14),
- avec une partie de blocage (32) qui est prévue sur l'insert (31) et qui est reliée au cadre (14) et
- avec une partie de montage (34) qui est affectée à la zone de fixation (16), et au moins une ouverture traversante (36) permettant de recevoir l'élément de fixation (22) de la baguette décorative (17),
- l'insert (31) comprenant au moins un élément d'enclenchement désenclenchable (38) qui est affecté à l'ouverture traversante (36),
- l'élément de fixation (22) de la baguette décorative (17) qui est positionné dans l'ouverture traversante (36) de l'insert (31) étant protégé par l'élément d'enclenchement désenclenchable (38) contre une désolidarisation involontaire,
- **caractérisé en ce que** dans le cadre (14) est prévue une zone de réception (51) menant à l'ouverture traversante (36) de la partie de montage (34) de l'insert (31) et destinée à recevoir et à positionner la baguette décorative (17) et laquelle présente une partie de paroi (55) sans paliers s'étendant depuis l'extérieur jusqu'à l'ouverture traversante (34) à laquelle est affectée une surface de paroi (56) sans paliers ménagée sur la partie profilée (22) de la baguette décorative (17) lorsque ladite baguette décorative (17) est dans une position de fixation.

2. Module de vitrage selon la revendication 1, **caractérisé en ce que** l'élément d'enclenchement désenclenchable (38) et l'ouverture traversante (36) sont disposés sur l'insert (31) de préférence de manière à former une seule pièce.

3. Module de vitrage selon la revendication 1 ou 2, **caractérisé en ce que** l'élément d'enclenchement désenclenchable (38) de l'insert (31) est positionné au voisinage de l'ouverture traversante (36) ou de manière contiguë à ladite ouverture traversante (36) et que l'extrémité libre (41) de l'élément d'enclenchement (38) traverse au moins partiellement le sens d'insertion de l'élément de fixation (22) de la baguette décorative (17) après sa mise en place dans la partie de montage (34).

4. Module de vitrage selon l'une quelconque des revendications précédentes, **caractérisé en ce que** l'élément d'enclenchement désenclenchable (38) est réalisé en forme de partie allongée ou de coin, et ce en tant que saillie, ergot d'arrêt ou clip d'arrêt.

5. Module de vitrage selon l'une quelconque des revendications précédentes, **caractérisé en ce que** l'insert (31) est fabriqué en matière plastique, en particulier en une matière plastique renforcée, de préférence renforcée de fibres, en métal, en particulier en tôle d'acier, ou en métal léger, en particulier en aluminium.

6. Module de vitrage selon l'une quelconque des revendications précédentes, **caractérisé en ce que** l'insert (31) présente plusieurs ouvertures traversantes (36) espacées les unes des autres et que de préférence ledit insert (31) s'étend sur ou dans le cadre (14), et ce sous la forme d'un insert continu (31), le long de la longueur de la baguette décorative (17).

7. Module de vitrage selon l'une quelconque des revendications précédentes, **caractérisé en ce que** l'insert (31) présente sur la partie de blocage (32) au moins une perforation (35) et/ou au moins une nervure de renforcement (33).

8. Module de vitrage selon l'une quelconque des revendications précédentes, **caractérisé en ce que** la partie de montage (34) et la partie de blocage (32) de l'insert (31) sont disposées dans un plan commun ou de manière à former un angle entre elles.

9. Module de vitrage selon l'une quelconque des revendications précédentes, **caractérisé en ce que** le ou les éléments de fixation (22) de la baguette décorative (17) sont réalisés en forme de partie allongée ou de patte et présentent au moins un évidement (24) ou creux en vue de recevoir l'élément d'enclenchement (38).
